(19) **Europäisches Patentamt / European Patent Office / Office européen des brevets**

(11) **EP 2 023 534 B1**

(12) ## FASCICULE DE BREVET EUROPEEN

(45) Date de publication et mention
de la délivrance du brevet:
**22.12.2010   Bulletin 2010/51**

(51) Int Cl.:
***H04L 12/26*** *(2006.01)*

(21) Numéro de dépôt: **08160731.9**

(22) Date de dépôt: **18.07.2008**

(54) **Procédé de détermination d'un temps de transmission par le motif élémentaire d'un flot de paquets de données**

Verfahren zur Bestimmung einer Übertragungszeit durch das Elementarmuster eines Stroms von Datenpaketen

Method of determining a transmission time by the elementary pattern of a data packet flow

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité:  **27.07.2007   FR 0756784**

(43) Date de publication de la demande:
**11.02.2009   Bulletin 2009/07**

(73) Titulaire: **FRANCE TELECOM**
**75015 Paris (FR)**

(72) Inventeurs:
• **Boyer, Pierre**
**22560, ILE GRANDE (FR)**
• **Boyer, Jacqueline**
**22560, ILE GRANDE (FR)**

(56) Documents cités:
**US-A1- 2002 181 436     US-B1- 6 377 583**
**US-B1- 7 139 271**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention concerne une technique de détermination d'un temps de transmission par motif élémentaire d'un flot de paquets de données, un paquet comprenant au moins un motif élémentaire, les paquets de données étant reçus par rafales en un point d'observation.

On se place ici dans le domaine de l'observation de réseaux de communication par paquets et plus précisément du trafic circulant sur les liens d'un réseau de communication.

Un lien d'un tel réseau de communication assure le transport d'au moins un flot de données. Le lien peut être par exemple un lien Ethernet optique ou cuivre. Les flots de données transportés sont multiplexés sur ce lien généralement d'une manière asynchrone. Du fait du multiplexage et de l'acheminement des flots dans le réseau par des équipements mettant en oeuvre des files d'attente, ils peuvent se présenter en un point d'observation sous la forme de rafales de paquets de données, en alternance avec des périodes de silence. La longueur d'un paquet est exprimée en fonction du nombre de motifs élémentaires qu'il comporte, par exemple en fonction du nombre d'octets. Le motif peut éventuellement être le paquet lui-même, par exemple une cellule ATM. Les paquets de données sont de longueur fixe ou variable.

Une méthode connue pour mesurer en temps réel le débit d'un flot de paquets consiste à dénombrer le nombre de motifs élémentaires des paquets de données du flot sous observation au cours de la durée d'une fenêtre d'observation, éventuellement glissante. Par mesure en temps réel, on entend qu'il s'agit d'une mesure qui ne nécessite pas une capture au préalable d'une quantité importante de paquets de données dans une zone mémoire contrairement à une mesure en temps différé qui utilise une telle zone mémoire pour effectuer une analyse en temps différé. Ainsi, une méthode en temps réel permet de mettre à disposition une mesure au fil de l'eau, c'est-à-dire le plus rapidement possible après l'arrivée de chaque paquet. La méthode connue utilisant une fenêtre d'observation glissante permet d'obtenir une estimation du débit relativement satisfaisante, notamment lors d'une période chargée. Toutefois, du fait de la structure temporelle du flot sous observation, alternant des rafales de paquets de données et des périodes de silence, les estimations du débit ne sont pas précises. En effet, si une taille de fenêtre trop faible est choisie, la mesure n'est pas assez précise du fait que le dénombrement est réalisé sur un nombre de paquets de données peu important. Au contraire, si une taille de fenêtre trop importante est choisie, les périodes de silence rendent la mesure moins précise.

On notera que mesurer le débit d'un flot est équivalent à mesurer le temps écoulé entre deux motifs élémentaires du flot, ce temps étant appelé par la suite temps de transmission par motif élémentaire.

Le document de brevet US7,139,271B1 présente un circuit intégré mettant en oeuvre une segmentation et un réassemblage comprenant un accès à une mémoire externe, ledit accès devant être effectué dans une durée dépendant du débit entrant des données.

Il existe donc un besoin d'une technique permettant de mesurer en temps réel de façon fiable le débit d'un flot de paquets de données, les paquets de données du flot de données pouvant être reçus par rafales.

L'invention répond à ce besoin en proposant un procédé de détermination d'un temps de transmission par motif élémentaire d'un flot de paquets de données, un paquet comprenant au moins un motif élémentaire, les paquets de données étant reçus par rafales, ledit procédé comprenant, pour une rafale en cours d'observation :

  a- une étape de détermination d'une échéance temporelle, au-delà de laquelle un paquet de données reçu n'appartient pas à ladite rafale en cours d'observation, à partir d'un temps de transmission par motif élémentaire ;

  b- si un paquet de données reçu appartient à la rafale en cours d'observation, une étape de réévaluation du temps de transmission par motif élémentaire à partir des longueurs des paquets de données de la rafale en cours d'observation,

les étapes a et b étant réitérées tant que des paquets de données appartenant à la rafale en cours d'observation sont reçus.

Des rafales de paquets d'un flot sous observation sont successivement reçues sur un lien d'un réseau de communication. Le réseau de communication peut être n'importe quel réseau de communication par paquets, par exemple un réseau ATM, IP ou Ethernet. Par paquets de données, on entend désigner une unité de données de protocole PDU (pour "Protocol Data Unit" en anglais) pour une couche du modèle de référence OSI, c'est-à-dire un paquet de données élémentaire échangé entre deux dispositifs au moyen de protocoles appropriés, et ce, au niveau d'une seule des couches du modèle OSI. A titre d'exemple, il peut s'agir de cellules ATM, de paquets ou datagrammes IP, de trames Ethernet,... Par flot, on entend un flot relatif à une connexion ATM, un flot de données IP, une agrégation de données d'une application ou de données véhiculées selon un protocole déterminé, .... En définissant une échéance temporelle de délimitation au-delà de laquelle un paquet reçu n'appartient pas à la rafale en cours, on peut ainsi identifier des rafales distinctes dans la succession de paquets reçus. Pour chaque paquet appartenant à la rafale, on peut évaluer un temps de transmission par motif élémentaire. Ce dernier sert alors à calculer l'échéance temporelle de délimitation suivante, que l'on compare à l'heure d'arrivée du paquet suivant pour décider s'il appartient à la rafale en cours d'observation. On prend en compte lors de la détermination de l'échéance temporelle de délimitation de la rafale applicable à un paquet donné la taille des paquets de la rafale jusqu'ici constituée. Il est à noter que la mise en oeuvre du procédé ne dépend pas des horloges des couches sous-jacentes, étant donné que les horodatages des paquets sont effectués localement : les instants d'arrivée des paquets sont comparés à une échéance temporelle de délimitation qui est déterminée localement. Le procédé est réitéré tant que les paquets reçus appartiennent à la même rafale. A la fin d'une itération, on obtient un temps de transmission par motif élémentaire prenant en compte l'ensemble des paquets de la rafale jusqu'ici constituée. Ainsi, la taille d'une fenêtre d'observation est adaptée de façon optimale à chaque rafale. Le temps de transmission par motif élémentaire ainsi déterminé est fiable et précis et n'est pas impacté par les périodes de silence éventuelles liées à la transmission par rafales de paquets.

Il est à noter également que le procédé est applicable aussi bien à des paquets de données de taille fixe, qu'à des paquets de données de taille variable.

Il est également applicable à une pluralité de flots transmis sur un même lien du réseau de communication.

Il est notamment utilisable en vue du contrôle ultérieur d'une agrégation de flots IP véhiculés par exemple par TCP (pour "Transmission Control Protocol"), de manière à confiner le trafic Internet dans une capacité d'écoulement limitée au sein d'une artère du réseau de communication.

En outre, le temps de transmission par motif élémentaire est réévalué en fonction d'une tolérance de gigue prédéterminée, afin de garantir une conformité de chaque paquet de données de la rafale en cours d'observation audit temps de transmission sous contrainte de ladite tolérance.

On fixe dans ce cas une tolérance de gigue, c'est-à-dire une valeur de dispersion temporelle admissible pour un instant de réception d'un paquet. La tolérance de gigue couvre les variations de temps de propagation dues au multiplexage des flots. Pour un flot sous observation, on vise à garantir une conformité de chaque paquet de données de la rafale en cours d'observation au temps de transmission par motif élémentaire sous contrainte de cette tolérance. Un paquet est dit conforme sous contrainte de la tolérance, si lorsqu'il est reçu avant une échéance temporelle de conformité, l'écart entre l'heure d'arrivée et cette échéance temporelle est inférieur à la valeur de la tolérance.

On détermine alors un temps de transmission visant à garantir la conformité de chacun des paquets de données reçus composant la rafale. Au plus tôt, un paquet doit être reçu à l'échéance temporelle de conformité diminuée de la tolérance de gigue pour être conforme. On calcule alors le temps de transmission par motif élémentaire permettant d'obtenir la conformité du paquet reçu de la rafale en cours d'observation.

Dans un premier mode de réalisation, on n'utilise pas la taille du paquet reçu à une itération pour déterminer l'échéance temporelle de conformité à laquelle il doit satisfaire. La conformité du paquet est dite a priori ou appelée pré-conformité.

Dans un deuxième mode de réalisation, on utilise la taille du paquet reçu à une itération pour déterminer l'échéance temporelle de conformité à laquelle il doit satisfaire. La conformité du paquet est dite a posteriori ou post-conformité.

Grâce à ces différentes informations déterminées, il est alors possible de définir précisément un dimensionnement des liens nécessaire à l'écoulement du trafic. On peut ainsi estimer les ressources nécessaires au bon écoulement des flots en termes de capacités de files d'attente et de bande passante.

De plus, lors de l'étape de réévaluation, on détermine un temps de transmission par motif élémentaire courant. Le procédé comprend alors une étape de test, dans laquelle on conserve en tant que temps de transmission par motif élémentaire le plus petit parmi l'ensemble des temps de transmission par motif élémentaire courants déterminés respectivement à une itération.

A une itération, on détermine un temps de transmission par motif élémentaire courant. Si on conserve, pour l'itération suivante, le plus petit parmi l'ensemble des temps de transmission par motif élémentaire courants déterminés au cours des itérations précédentes en tant que temps de transmission par motif élémentaire, on garantit que chacun des paquets de données composant la rafale reçus aux itérations précédentes est conforme au temps de transmission par motif élémentaire sous contrainte de la tolérance.

En outre, lorsqu'un paquet de données reçu arrive au-delà de l'échéance temporelle, l'observation d'une nouvelle rafale est commencée.

Lorsque le paquet de données est reçu au-delà de l'échéance temporelle de délimitation, il n'appartient pas à la rafale en cours d'observation. On débute alors l'observation d'une nouvelle rafale.

De plus, le procédé comprend en outre une étape de sauvegarde, dans laquelle on mémorise le temps de transmission par motif élémentaire de la rafale précédemment en cours d'observation et on détermine le plus petit parmi l'ensemble des temps de transmission par motif élémentaire mémorisés, obtenant ainsi un temps de transmission par motif élémentaire du flot, permettant de garantir la conformité de chaque paquet du flot.

Une fois la fin de la rafale détectée, le temps de transmission par motif élémentaire déterminé à la dernière itération devient un temps de transmission par motif élémentaire de cette rafale. Ce temps de transmission par motif élémentaire de cette rafale garantit la conformité à ce temps de transmission sous contrainte de la tolérance de chacun des paquets de données de la rafale. En conservant la valeur la plus faible de l'ensemble des temps de transmission par motif élémentaire de chaque rafale, on obtient un temps de transmission par motif élémentaire du flot, qui garantit la conformité à ce temps de transmission sous contrainte de la tolérance de chacun des paquets du flot.

Dans le premier mode de réalisation, le temps de transmission par motif élémentaire courant, à une itération k supérieure ou égale à un, pour une rafale i en cours d'observation, est réévalué à l'aide de la formule suivante :

$$T_k^i = \frac{t_k - t_0 + \tau}{\sum_{m=0}^{k-1} S_m}$$

où $t_0$ est l'instant de réception du premier paquet de données de la rafale, $t_k$ est l'instant de réception du paquet de données appartenant à la rafale, $S_m$ la taille d'un paquet de la rafale et $\tau$ la tolérance de gigue.

Dans le deuxième mode de réalisation, le temps de transmission par motif élémentaire courant, à une itération k supérieure ou égale à un, pour une rafale i en cours d'observation, est réévalué à l'aide de la formule suivante :

$$T_k^i = \frac{t_k - t_0 + \tau}{\sum_{m=1}^{k} S_m}$$

où $t_0$ est l'instant de réception du premier paquet de données de la rafale, $t_k$ est l'instant de réception du paquet de données appartenant à la rafale, $S_m$ la taille d'un paquet de la rafale et $\tau$ la tolérance de gigue.

En variante à ce deuxième mode de réalisation, on peut également prendre en compte la taille du premier paquet de données et dans ce cas, le temps de transmission par motif élémentaire courant, à une itération k supérieure ou égale à un, pour une rafale i en cours d'observation, est réévalué à l'aide de la formule suivante :

$$T_k^i = \frac{t_k - t_0 + \tau}{\sum_{m=0}^{k} S_m}$$

L'invention concerne également un dispositif de détermination d'un temps de transmission par motif élémentaire d'un flot de paquets de données, un paquet comprenant au moins un motif élémentaire, les paquets de données étant reçus par rafales, ledit dispositif comprenant :

- des moyens de détermination d'une échéance temporelle, au-delà de laquelle un paquet de données reçu n'appartient pas à une rafale en cours d'observation, agencés pour déterminer une échéance temporelle à partir d'un temps de transmission par motif élémentaire ;
- des moyens de réévaluation du temps de transmission par motif élémentaire, pour une rafale en cours d'observation, à partir des longueurs des paquets de données de ladite rafale ;
- des moyens de commande, agencés pour commander de façon itérative les modules de détermination d'une échéance temporelle et de réévaluation du temps de transmission et tant que des paquets de données appartenant à la rafale en cours d'observation sont reçus.

Le dispositif peut être une sonde passive, placée en dérivation sur un lien physique de transmission du réseau de communication. Le dispositif peut être également un équipement du réseau de communication, tel qu'un commutateur ou un routeur.

L'invention concerne en outre :

- un programme pour un dispositif de détermination d'un temps de transmission par motif élémentaire d'un flot de paquets de données, comprenant des instructions de code de programme destinées à commander l'exécution des étapes du procédé précédemment décrit, lorsque ledit programme est exécuté par ledit dispositif ;
- un support d'enregistrement lisible par un dispositif de détermination d'un temps de transmission par motif élémentaire sur lequel est enregistré le programme pour un dispositif de détermination.

L'invention sera mieux comprise à l'aide de la description suivante d'un mode de réalisation particulier du procédé de l'invention, en référence aux dessins annexés sur lesquels :

- la figure 1 représente un dispositif de détermination d'un temps de transmission par motif élémentaire d'un flot de paquets de données, dans son environnement selon un mode particulier de réalisation de l'invention ;
- la figure 2 représente les étapes du procédé de détermination d'un temps de transmission par motif élémentaire d'un flot de paquets de données, selon un mode particulier de réalisation de l'invention ;
- la figure 3 représente un dispositif de détermination d'un temps de transmission par motif élémentaire d'un flot selon un mode particulier de réalisation de l'invention.

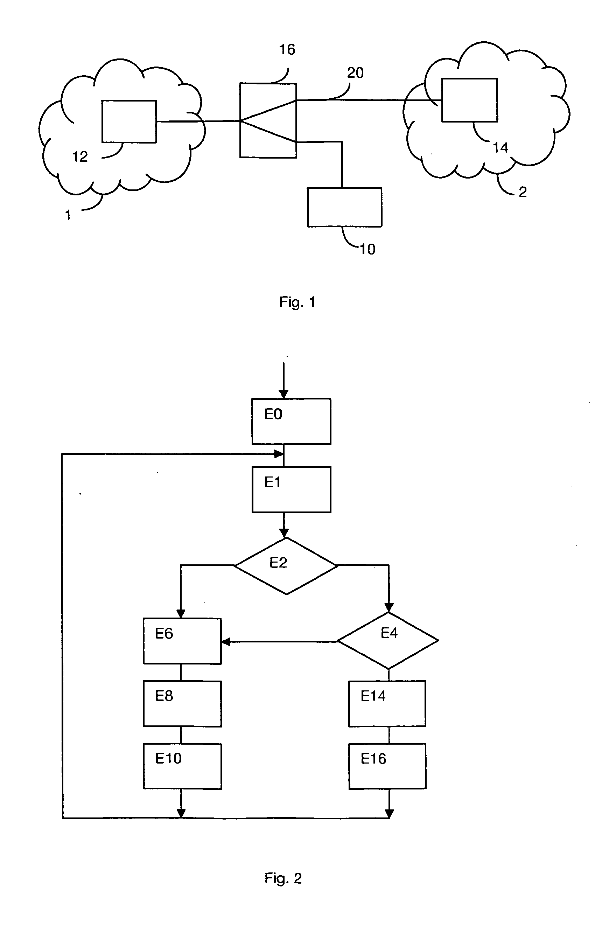

La figure 1 représente un dispositif 10 de détermination d'un temps de transmission par motif élémentaire d'un flot de paquets de données, dans son environnement dans un mode particulier de réalisation. Des rafales de paquets du flot sous observation sont successivement reçues sur un lien 20 d'un réseau de communication. Le réseau de communication peut être n'importe quel réseau de communication par paquets, par exemple un réseau ATM, IP ou Ethernet.

Un lien du réseau de communication assure le transport d'au moins un flot de données. Les flots de données transportés sont multiplexés sur ce lien généralement d'une manière asynchrone. Le lien 20 du réseau de communication sur lequel l'observation va être effectuée relie deux équipements de réseaux de communication respectifs 1, 2. Le premier réseau de communication 1 correspond par exemple au réseau où est localisée une source d'émission de flux télévisuels. Le deuxième réseau de communication 2 est par exemple un réseau IP. Les flots de données sont dupliqués vers le dispositif 10 de détermination par l'intermédiaire d'un dispositif de duplication des flots, par exemple un coupleur optique 16.

On a également représenté sur la figure 1 un premier équipement 12 du réseau de communication 1, par exemple un routeur IP, par lequel sont acheminés les flots en sortie de la source d'émission de flux télévisuels, et un équipement 14 d'entrée dans le réseau de communication 2.

Dans un autre mode de réalisation, le dispositif 10 de détermination d'un temps de transmission par motif élémentaire peut être intégré dans un équipement d'un réseau de communication, par exemple un des routeurs du premier réseau de communication 1 ou un des routeurs du deuxième réseau de communication 2.

Par ailleurs, un tel dispositif 10 de détermination d'un temps de transmission par motif élémentaire d'un flot de paquets de données peut être également intégré dans une entité de mise en conformité d'au moins un flot.

Par paquets de données, on entend désigner une unité de données de protocole PDU (pour "Protocol Data Unit" en anglais) pour une couche du modèle de référence OSI, c'est-à-dire un paquet de données élémentaire échangé entre deux dispositifs au moyen de protocoles appropriés, et ce, au niveau d'une seule des couches du modèle OSI. A titre d'exemple, il peut s'agir de cellules ATM, de paquets ou datagrammes IP, de trames Ethernet,... Par flot, on entend un flot relatif à une connexion ATM, un flot de données IP, une agrégation de données d'une application ou de données véhiculées selon un protocole déterminé, ....

La longueur d'un paquet de données est exprimée en fonction du nombre de motifs élémentaires qu'il comporte, par exemple en fonction du nombre d'octets. Le motif peut éventuellement être le paquet lui-même, par exemple une cellule ATM. Les paquets de données sont de longueur fixe ou variable.

On définit, par ailleurs, une tolérance de gigue. La tolérance de gigue correspond à une valeur de dispersion temporelle admissible pour un instant de réception d'un paquet. La tolérance de gigue couvre les variations de temps de propagation dues au multiplexage des flots. A titre d'exemple, pour un flot temps réel, tel qu'un flux télévisuel, la tolérance de gigue doit être de l'ordre du temps de transmission de quelques trames de données, soit pour un flot codé selon la norme MPEG-II en simple définition, de l'ordre de trente millisecondes. La tolérance de gigue prend des valeurs supérieures ou égales à zéro.

Un paquet est dit conforme à un débit prédéterminé sous contrainte de la tolérance de gigue, si lorsqu'il est reçu avant une échéance temporelle de conformité permettant de garantir un débit inférieur ou égal au débit prédéterminé, l'écart entre l'heure d'arrivée et l'échéance temporelle est inférieur à la valeur de la tolérance $\tau$.

On note que déterminer le temps écoulé entre deux motifs élémentaires du flot est équivalent à déterminer le débit d'un flot, puisque ces deux grandeurs sont inverses l'une de l'autre en exprimant le débit en nombre de motif élémentaires par unité de temps. Le temps entre deux motifs élémentaires est appelé par la suite temps de transmission par motif élémentaire.

Par la suite, on utilise indifféremment les expressions "conforme à un débit prédéterminé sous contrainte de la tolérance" et "conforme au temps de transmission prédéterminé sous contrainte de la tolérance".

Nous allons maintenant décrire le procédé de détermination d'un temps de transmission par motif élémentaire, dans un premier mode de réalisation, en relation avec la figure 2.

Dans une étape d'initialisation E0, on reçoit un premier paquet de données et on initialise l'instant de début de la rafale $t_0$ à l'instant de réception de ce premier paquet de données et le temps de transmission par motif élémentaire de la rafale et du flot à une valeur maximale.

Dans ce premier mode de réalisation, on se place dans un mode dit de pré-conformité, c'est-à-dire que la taille du paquet n'intervient pas dans le calcul de son échéance temporelle de conformité.

Le premier paquet de données reçu est alors le premier paquet de la rafale en cours d'observation, soit le paquet $P_0$.

Dans une étape d'attente E1, le procédé est en attente de réception d'un paquet de données.

Si un paquet de données est reçu, le procédé passe à une étape E2 de test.

Dans une étape E2 de test, le procédé vérifie si le paquet de données reçu est le deuxième paquet de la rafale en cours d'observation. En effet, les premier et deuxième paquets appartiennent toujours à la rafale en cours d'observation. Si ce paquet reçu est le deuxième paquet de la rafale, le procédé passe alors dans une étape E6 de réévaluation du temps de transmission par motif élémentaire courant.

Si ce n'est pas le cas, c'est-à-dire si le paquet de données reçu n'est pas le deuxième paquet de la rafale en cours d'observation, le procédé passe à une étape E4 de test d'appartenance du paquet à la rafale en cours d'observation.

Dans l'étape E4 de test d'appartenance du paquet à la rafale en cours d'observation, on vérifie si l'instant d'arrivée $t_k$ du paquet de données reçu est inférieur à une échéance temporelle $TAT_k$ de délimitation.

L'échéance temporelle de délimitation utilisée à cette itération est déterminée lors d'une étape E10 de détermination de l'échéance temporelle de l'itération précédente. Si l'instant d'arrivée $t_k$ du paquet de données reçu est inférieur à l'échéance temporelle $TAT_k$ de délimitation, le paquet de données appartient à la rafale en cours d'observation et le procédé passe à l'étape de réévaluation E6 du temps de transmission par motif élémentaire courant.

On note par la suite que, à cette étape du procédé, la rafale i en cours d'observation est composée des paquets de données $P_0$ à $P_k$ de longueurs respectives So à $S_k$ et d'instants de réception respectifs $t_0$ à $t_k$. Les longueurs des paquets sont obtenues soit par lecture de l'entête du paquet soit par comptage.

A l'étape de réévaluation E6, le temps de transmission par motif élémentaire courant $T'_k$ est réévalué à partir des longueurs des paquets de données de la rafale en cours d'observation. Cette étape E6 est détaillée ultérieurement.

Dans une étape de test E8, on conserve en tant que temps de transmission par motif élémentaire pour cette rafale i en cours d'observation le plus petit parmi l'ensemble des temps de transmission par motif élémentaire courants, chacun d'entre eux étant déterminé à une itération du procédé sur cette rafale :

$$T^i = \min(T^i, T'_k)$$

En effet, si on conserve pour l'itération suivante le plus petit parmi l'ensemble des temps de transmission par motif élémentaire courants, on garantit que chacun des paquets de données reçus aux itérations précédentes et composant la rafale en cours d'observation est conforme à ce temps de transmission par motif élémentaire sous la contrainte de la tolérance.

Dans une étape de détermination E10 d'une échéance temporelle de délimitation, c'est-à-dire une échéance temporelle au-delà de laquelle un paquet de données reçu n'appartient pas à ladite rafale en cours d'observation, on détermine l'échéance temporelle $TAT_{k+1}$ de délimitation du paquet suivant $P_{k+1}$ à partir du temps de transmission par motif élémentaire $T^i$ et de la longueur des paquets de données reçus appartenant à la rafale i en cours d'observation :

$$TAT_{k+1} = t_0 + \sum_{m=0}^{k} S_m \cdot T^i$$

Une fois déterminée de la sorte l'échéance temporelle de délimitation, c'est-à-dire l'échéance temporelle au-delà de laquelle le prochain paquet reçu n'appartient pas à la rafale i en cours d'observation, le procédé passe ensuite à l'étape E1 d'attente de réception d'un paquet de données.

On va maintenant préciser la façon dont est réévalué le temps de transmission par motif élémentaire courant à l'étape E6.

L'heure théorique d'arrivée $\theta_k$, appelée aussi échéance temporelle de conformité, du paquet de données $P_k$ est déterminée de la façon suivante :

$$\theta_k = t_0 + \sum_{m=0}^{k-1} S_m \cdot T^i_k$$

On cherche à déterminer le temps de transmission $T^i_k$ par motif élémentaire courant le plus grand possible compte tenu de la tolérance $\tau$ accordée et de la contrainte imposée que chaque paquet soit conforme. La plus grande valeur possible de $T'_k$ est obtenue lorsque le paquet $P_k$, qui arrive à l'instant $t_k$, arrive le plus tôt possible avant son heure théorique d'arrivée $\theta_k$, c'est-à-dire :

$$t_k = \theta_k - \tau = t_0 - \tau + \sum_{m=0}^{k-1} S_m \cdot T^i_k$$

D'où, le temps de transmission par motif élémentaire $T'_k$ courant est déterminé de la façon suivante :

$$T'_k = \frac{t_k - t_0 + \tau}{\sum_{m=0}^{k-1} S_m}$$

Ainsi, le temps de transmission par motif élémentaire courant $T'_k$ est réévalué en fonction d'une tolérance de gigue $\tau$ prédéterminée, afin de garantir une conformité du paquet de données $P_k$ de la rafale i en cours d'observation audit temps de transmission sous contrainte de ladite tolérance.

On se place maintenant dans le cas où lors de l'étape E4 de test d'appartenance à la rafale en cours d'observation, on a déterminé que le paquet de données reçu n'appartient pas à la rafale i en cours d'observation. Le paquet de données reçu délimite donc une nouvelle rafale (i+1) dont l'observation débute. Dans une étape E14, on initialise l'instant de début $t_0$ de cette nouvelle rafale à l'instant de réception de ce paquet de données et le temps de transmission par motif élémentaire de la rafale à une valeur maximale. Il est à noter que la mise en oeuvre du procédé ne dépend pas des horloges des couches sous-jacentes, étant donné que les horodatages sont effectués localement : en effet, les instants d'arrivée des paquets sont comparés à une échéance temporelle de délimitation qui est elle-même déterminée localement.

Dans une étape E 16 de sauvegarde correspondant au traitement des données issues de l'observation de la rafale i, pour laquelle l'observation est terminée, on mémorise le temps de transmission par motif élémentaire $T^i$ de la rafale i.

Ainsi, la taille d'une fenêtre d'observation est adaptée de façon optimale à chaque rafale. Le temps de transmission par motif élémentaire de la rafale ainsi déterminé est fiable et précis et n'est pas impacté par les périodes de silence éventuelles liées à la transmission par rafales de paquets.

Dans cette étape E16, on mémorise également le plus petit dans l'ensemble des temps de transmission par motif élémentaire des différentes rafales observées. En conservant la valeur la plus faible de l'ensemble des temps de transmission par motif élémentaire des différentes rafales observées, on obtient un temps de transmission par motif élémentaire du flot, qui garantit la conformité de chacun des paquets du flot à ce temps de transmission sous contrainte de la tolérance.

Optionnellement, dans l'étape E 16, on détermine un temps de transmission R par motif élémentaire du flot lissé en appliquant un filtre linéaire aux valeurs de temps de transmission par motif élémentaire de chaque rafale observée mémorisée. La détermination de ce temps de transmission par motif élémentaire du flot lissé s'effectue alors de la manière suivante, $R^1$ désignant la valeur de R à la fin de la rafale i :

$$R^i = R^{i-1}(1 - p) + pT^i$$

On peut choisir par exemple p égal à 1/1024.

En appliquant un filtre linéaire sur les valeurs de temps de transmission par motif élémentaire obtenues par rafale, on obtient une valeur lissée qui ne garantit pas la conformité de chaque paquet du flot au débit correspondant à ce temps de transmission R assorti de la tolérance mais qui permet une allocation de ressources moins exigeante.

Dans un second mode de réalisation, on se place dans un mode dit de post-conformité, c'est-à-dire que la taille du paquet de données courant est prise en compte dans le calcul de l'échéance temporelle de conformité.

Ce mode de réalisation diffère du précédent dans la manière dont est réévalué le temps de transmission par motif élémentaire courant lors de l'étape E6 de réévaluation.

Dans ce deuxième mode de réalisation, à l'étape de réévaluation E6, le temps de transmission par motif élémentaire courant $T^i_k$ est réévalué à partir des longueurs des paquets de données de la rafale en cours d'observation.

L'heure théorique d'arrivée $\theta_k$ , appelée également échéance temporelle de conformité, du paquet de données $P_k$ est déterminée de la façon suivante :

$$\theta_k = t_0 + \sum_{m=1}^{k} S_m \cdot T^i_k$$

On cherche à déterminer le temps de transmission $T'_k$ par motif élémentaire le plus grand possible compte tenu de la tolérance $\tau$ accordée et de la contrainte imposée que chaque paquet soit conforme. La plus grande valeur possible de $T^i_k$ est obtenue lorsque le paquet $P_k$, qui arrive à l'instant $t_k$, arrive le plus tôt possible avant son heure théorique d'arrivée $\theta_k$, c'est-à-dire :

$$t_k = \theta_k - \tau = t_0 - \tau + \sum_{m=1}^{k} S_m \cdot T'_k$$

D'où, le temps de transmission par motif élémentaire $T'_k$ est déterminé de la façon suivante :

$$T'_k = \frac{t_k - t_0 + \tau}{\sum_{m=1}^{k} S_m}$$

Ainsi, le temps de transmission par motif élémentaire courant $T'_k$ est réévalué en fonction d'une tolérance de gigue $\tau$ prédéterminée, afin de garantir une conformité du paquet de données $P_k$ de la rafale i en cours d'observation audit temps de transmission sous contrainte de ladite tolérance.

En variante à ce deuxième mode de réalisation, on peut prendre en compte la taille $S_0$ du premier paquet reçu appartenant à la rafale en cours d'observation dans le calcul de l'échéance temporelle de conformité. On obtient alors l'équation suivante pour la réévaluation du temps de transmission par motif élémentaire courant à l'itération k, lors de l'étape E6 de réévaluation du temps de transmission par motif élémentaire courant :

$$T^i_k = \frac{t_k - t_0 + \tau}{\sum_{m=0}^{k} S_m}$$

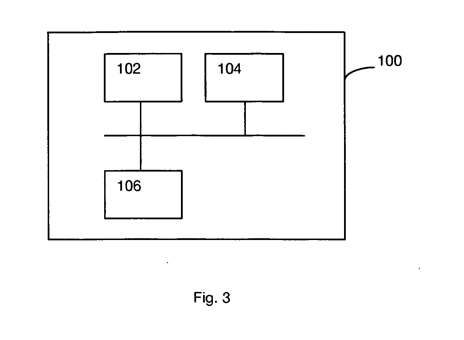

Nous allons maintenant décrire un dispositif 100 de détermination d'un temps de transmission par motif élémentaire d'un flot de paquets de données, un paquet comprenant au moins un motif élémentaire, les paquets de données étant reçus par rafales, en relation avec la figure 3.

Le dispositif 100 comprend :

- un module 102 de détermination d'une échéance temporelle de délimitation, au-delà de laquelle un paquet de données reçu n'appartient pas à une rafale en cours d'observation, agencé pour déterminer une échéance temporelle de délimitation à partir d'un temps de transmission par motif élémentaire ;
- un module 104 de réévaluation du temps de transmission par motif élémentaire, pour une rafale en cours d'observation et pour un paquet de données reçu appartenant à la rafale en cours d'observation, à partir des longueurs des paquets de données de ladite rafale ;
- un module 106 de commande, agencé pour commander de façon itérative les modules de détermination d'une échéance temporelle de délimitation 102 et de réévaluation du temps de transmission par motif élémentaire 104 et tant que des paquets de données appartenant à la rafale en cours d'observation sont reçus.

Le module 104 de réévaluation est en outre agencé pour réévaluer le temps de transmission par motif élémentaire également en fonction d'une tolérance de gigue prédéterminée, afin de garantir une conformité de chaque paquet de données de la rafale en cours d'observation à ce temps de transmission sous contrainte de la tolérance.

Optionnellement, le module 104 de réévaluation du temps de transmission par motif élémentaire est également agencé pour déterminer un temps de transmission par motif élémentaire courant et pour conserver en tant que temps de transmission par motif élémentaire, le plus petit parmi l'ensemble des temps de transmission par motif élémentaire courants respectivement déterminés à une itération.

Le module 106 de commande est en outre agencé pour initialiser l'observation d'une nouvelle rafale et pour déterminer le plus petit parmi l'ensemble des temps de transmission par motif élémentaire de chaque rafale mémorisés, obtenant ainsi un temps de transmission par motif élémentaire du flot, permettant de garantir la conformité de chaque paquet du flot.

Les modules 102, 104 et 106 sont agencés pour mettre en oeuvre le procédé précédemment décrit. Il s'agit de préférence de modules logiciels comprenant des instructions logicielles pour faire exécuter les étapes du procédé précédemment décrit, mises en oeuvre par le dispositif de détermination. L'invention concerne donc aussi :

- un programme pour un dispositif de détermination d'un temps de transmission par motif élémentaire d'un flot de paquets de données, comprenant des instructions de code de programme destinées à commander l'exécution des étapes du procédé précédemment décrit, lorsque ledit programme est exécuté par ledit dispositif ;
- un support d'enregistrement lisible par un dispositif de détermination d'un temps de transmission par motif élémentaire sur lequel est enregistré le programme pour un dispositif de détermination.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

Il est à noter également que le procédé est applicable aussi bien à des paquets de données de taille fixe, qu'à des paquets de données de taille variable.

Il est également applicable à une pluralité de flots transmis sur un même lien du réseau de communication.

Il est notamment utilisable en vue du contrôle ultérieur d'une agrégation de flots IP véhiculés par exemple par TCP (pour "Transmission Control Protocol"), de manière à confiner le trafic Internet dans une capacité d'écoulement limitée au sein d'une artère du réseau de communication.

## Revendications

1. Procédé de détermination d'un temps de transmission par motif élémentaire d'un flot de paquets de données, un paquet comprenant au moins un motif élémentaire, les paquets de données étant reçus par rafales, ledit procédé étant **caractérisé en ce qu'**il comprend, pour une rafale en cours d'observation :

   a- une étape de détermination (E10) d'une échéance temporelle au-delà de laquelle un paquet de données reçu n'appartient pas à ladite rafale en cours d'observation, à partir d'un temps de transmission par motif élémentaire ;
   b- si un paquet de données reçu appartient à la rafale en cours d'observation, une étape de réévaluation (E6) du temps de transmission par motif élémentaire à partir des longueurs des paquets de données de la rafale en cours d'observation,

   les étapes a et b étant réitérées tant que des paquets de données appartenant à la rafale en cours d'observation sont reçus.

2. Procédé selon la revendication 1, dans lequel le temps de transmission par motif élémentaire est réévalué en fonction d'une tolérance de gigue prédéterminée, afin de garantir une conformité de chaque paquet de données de la rafale en cours d'observation audit temps de transmission sous contrainte de ladite tolérance.

**3.** Procédé selon l'une quelconque des revendications précédentes, dans lequel lors de l'étape de réévaluation (E6), on détermine un temps de transmission par motif élémentaire courant et ledit procédé comprenant en outre une étape de test (E8), dans laquelle on conserve en tant que temps de transmission par motif élémentaire le plus petit parmi l'ensemble des temps de transmission par motif élémentaire courants déterminés respectivement à une itération.

**4.** Procédé selon l'une quelconque des revendications précédentes, dans lequel, lorsqu'un paquet de données reçu arrive au-delà de l'échéance temporelle, l'observation d'une nouvelle rafale est commencée (E14).

**5.** Procédé selon la revendication 4, comprenant en outre une étape de sauvegarde (E16), dans laquelle on mémorise le temps de transmission par motif élémentaire de la rafale précédemment en cours d'observation et on détermine le plus petit parmi l'ensemble des temps de transmission par motif élémentaire mémorisés, obtenant ainsi un temps de transmission par motif élémentaire du flot, permettant de garantir la conformité de chaque paquet du flot.

**6.** Procédé selon l'une quelconque des revendications 2 à 5, dans lequel le temps de transmission par motif élémentaire courant, à une itération k supérieure ou égale à un, pour une rafale i en cours d'observation, est réévalué à l'aide de la formule suivante :

$$T_k^i = \frac{t_k - t_0 + \tau}{\sum_{m=0}^{k-1} S_m}$$

où $t_0$ est l'instant de réception du premier paquet de données de la rafale, $t_k$ est l'instant de réception du paquet de données appartenant à la rafale, $S_m$ la taille d'un paquet de la rafale et $\tau$ la tolérance de gigue.

**7.** Procédé selon l'une quelconque des revendications 2 à 5, dans lequel le temps de transmission par motif élémentaire courant, à l'itération k supérieure ou égale à un, pour une rafale i en cours d'observation, est réévalué à l'aide de la formule suivante :

$$T_k^i = \frac{t_k - t_0 + \tau}{\sum_{m=0}^{k} S_m}$$

où $t_0$ est l'instant de réception du premier paquet de données de la rafale, $t_k$ est l'instant de réception du paquet de données appartenant à la rafale, $S_m$ la taille d'un paquet de la rafale et $\tau$ la tolérance de gigue.

**8.** Dispositif (100) de détermination d'un temps de transmission par motif élémentaire d'un flot de paquets de données, un paquet comprenant au moins un motif élémentaire, les paquets de données étant reçus par rafales, ledit dispositif étant **caractérisé en ce qu'**il comprend :

- des moyens de détermination d'une échéance temporelle (102), au-delà de laquelle un paquet de données reçu n'appartient pas à une rafale en cours d'observation, agencés pour déterminer une échéance temporelle à partir d'un temps de transmission par motif élémentaire ;
- des moyens de réévaluation (104) du temps de transmission par motif élémentaire, pour une rafale en cours d'observation, à partir des longueurs des paquets de données de ladite rafale ;
- des moyens de commande (106), agencés pour commander de façon itérative les modules de détermination d'une échéance temporelle et de réévaluation du temps de transmission et tant que des paquets de données appartenant à la rafale en cours d'observation sont reçus.

**9.** Programme pour un dispositif de détermination d'un temps de transmission par motif élémentaire d'un flot de paquets de données, comprenant des instructions de code de programme destinées à commander l'exécution des étapes du procédé selon l'une des revendications 1 à 7, lorsque ledit programme est exécuté par ledit dispositif.

**10.** Support d'enregistrement lisible par un dispositif sur lequel est enregistré le programme selon la revendication 9.

**Claims**

**1.** Method of determining a transmission time per unit cell of a flow of data packets, a packet comprising at least one unit cell, the data packets being received in bursts, said method being **characterized in that** it comprises, for a burst currently being observed:

a- a step (E10) for determining an expiration time, beyond which a received data packet does not belong to said burst currently being observed, from a transmission time per unit cell;

b- if a received data packet belongs to the burst currently being observed, a step (E6) for re-estimating the transmission time per unit cell from the lengths of the data packets of the burst currently being observed,

the steps a and b being repeated as long as data packets belonging to the burst currently being observed are received.

2. Method according to Claim 1, in which the transmission time per unit cell is re-estimated according to a predetermined jitter tolerance, in order to guarantee a conformity of each data packet of the burst currently being observed to said transmission time constrained by said tolerance.

3. Method according to any one of the preceding claims, in which, in the re-estimation step (E6), a current transmission time per unit cell is determined, said method also comprising a test step (E8), in which the smallest out of all the current transmission times per unit cell determined respectively on one iteration is retained as the transmission time per unit cell.

4. Method according to any one of the preceding claims, in which, when a received data packet arrives beyond the time delay, the observation of a new burst is begun (E14).

5. Method according to Claim 4, also comprising a backup step (E16), in which the transmission time per unit cell of the burst previously being observed is stored and the smallest out of all the stored transmission times per unit cell is determined, so obtaining a transmission time per unit cell of the flow, making it possible to guarantee the conformity of each packet of the flow.

6. Method according to any one of Claims 2 to 5, in which the current transmission time per unit cell, at an iteration k greater than or equal to one, for a burst i currently being observed, is re-estimated using the following formula:

$$T_k^i = \frac{t_k - t_0 + \tau}{\sum_{m=0}^{k-1} S_m}$$

where $t_0$ is the time of arrival of the first data packet of the burst, $t_k$ is the time of arrival of the data packet belonging to the burst, $S_m$ the size of a packet of the burst and $\tau$ the jitter tolerance.

7. Method according to any one of Claims 2 to 5, in which the current transmission time per unit cell, at the iteration k greater than or equal to one, for a burst i currently being observed, is re-estimated using the following formula:

$$T_k^i = \frac{t_k - t_0 + \tau}{\sum_{m=0}^{k} S_m}$$

where $t_0$ is the time of arrival of the first data packet of the burst, $t_k$ is the time of arrival of the data packet belonging to the burst, $S_m$ the size of a packet of the burst and $\tau$ the jitter tolerance.

8. Device (100) for determining a transmission time per unit cell of a flow of data packets, a packet comprising at least one unit cell, the data packets being received in bursts, said device being **characterized in that** it comprises:

- means of determining an expiration time (102), beyond which a received data packet does not belong to a burst currently being observed, arranged to determine an expiration time from a transmission time per unit cell;

- means (104) of re-estimating the transmission time per unit cell, for a burst currently being observed, from the lengths of the data packets of said burst;

- control means (106), arranged to iteratively control the modules for determining an expiration time and for re-estimating the transmission time and as long as data packets belonging to the burst currently being observed are received.

9. Program for a device for determining a transmission time per unit cell of a flow of data packets, comprising program code instructions for controlling the execution of the steps of the method according to one of Claims 1 to 7, when said program is executed by said device.

10. Storage medium that can be read by a device on which the program according to Claim 9 is stored.

**Patentansprüche**

1. Verfahren zur Bestimmung einer Übertragungszeit pro Elementarmuster eines Stroms von Datenpaketen, wobei ein Paket mindestens ein Elementarmuster enthält, wobei die Datenpakete in Bursts empfangen werden, wobei das Verfahren **dadurch gekennzeichnet ist, dass** es für einen beobachteten Burst enthält:

a- einen Schritt der Bestimmung (E10) einer zeitlichen Frist, außerhalb der ein empfangenes Datenpaket nicht zum beobachteten Burst gehört, ausgehend von einer Übertragungszeit pro Elementarmuster;

b- wenn ein empfangenes Datenpaket zu dem beobachteten Burst gehört, einen Neubewertungsschritt (E6) der Übertragungszeit pro Elementarmuster ausgehend von den Längen der Datenpakete des beobachteten Bursts,

wobei die Schritte a und b wiederholt werden, so lange zum beobachteten Burst gehörende Datenpakete empfangen werden.

2. Verfahren nach Anspruch 1, bei dem die Übertragungszeit pro Elementarmuster in Abhängigkeit von einer vorbestimmten Jittertoleranz neubewertet wird, um eine Konformität jedes Datenpakets des beobachteten Bursts mit der Übertragungszeit unter dem Zwang der Toleranz zu garantieren.

3. Verfahren nach einem der vorhergehenden Ansprüche, bei dem im Neubewertungsschritt (E6) eine laufende Übertragungszeit pro Elementarmuster bestimmt wird, und das Verfahren außerdem einen Testschritt (E8) enthält, in dem als Übertragungszeit pro Elementarmuster die kürzeste der Gesamtheit der laufenden Übertragungszeiten pro Elementarmuster beibehalten wird, die jeweils bei einer Iteration bestimmt werden.

4. Verfahren nach einem der vorhergehenden Ansprüche, bei dem, wenn ein empfangenes Datenpaket außerhalb der zeitlichen Frist ankommt, die Beobachtung eines neuen Bursts begonnen wird (E14).

5. Verfahren nach Anspruch 4, das außerdem einen Sicherungsschritt (E16) enthält, in dem die Übertragungszeit pro Elementarmuster des vorher beobachteten Bursts gespeichert wird, und die kürzeste Übertragungszeit aus der Gesamtheit der gespeicherten Übertragungszeiten pro Elementarmuster bestimmt wird, wodurch eine Übertragungszeit pro Elementarmuster des Stroms erhalten wird, was es ermöglicht, die Konformität jedes Paket des Stroms zu garantieren.

6. Verfahren nach einem der Ansprüche 2 bis 5, bei dem die laufende Übertragungszeit pro Elementarmuster, bei einer Iteration k höher als oder gleich Eins, für einen beobachteten Burst i mit Hilfe der folgenden Formel neubewertet wird:

$$T_k^i = \frac{t_k - t_0 + \tau}{\sum_{m=0}^{k-1} S_m}$$

wobei $t_0$ der Empfangszeitpunkt des ersten Datenpakets des Bursts, $t_k$ der Empfangszeitpunkt des zum Burst gehörenden Datenpakets, $S_m$ die Größe eines Pakets des Bursts und $\tau$ die Jittertoleranz ist.

7. Verfahren nach einem der Ansprüche 2 bis 5, bei dem die laufende Übertragungszeit pro Elementarmuster, bei der Iteration k höher als oder gleich Eins, für einen beobachteten Burst i mit Hilfe der folgenden Formel neubewertet wird:

$$T_k^i = \frac{t_k - t_0 + \tau}{\sum_{m=0}^{k} S_m}$$

wobei $t_0$ der Empfangszeitpunkt des ersten Datenpakets des Bursts, $t_k$ der Empfangszeitpunkt des zum Burst gehörenden Datenpakets, $S_m$ die Größe eines Pakets des Bursts und $\tau$ die Jittertoleranz ist.

8. Vorrichtung (100) zur Bestimmung einer Übertragungszeit pro Elementarmuster eines Stroms von Datenpaketen, wobei ein Paket mindestens ein Elementarmuster enthält, wobei die Datenpakete in Bursts empfangen werden, wobei die Vorrichtung **dadurch gekennzeichnet ist, dass** sie enthält:

- Einrichtungen zur Bestimmung einer zeitlichen Frist (102), außerhalb der ein empfangenes Datenpaket nicht zum einem Beobachteten Burst gehört, die eingerichtet sind, um eine zeitliche Frist ausgehend von einer Übertragungszeit pro Elementarmuster zu bestimmen;

- Einrichtungen zur Neubewertung (104) der Übertragungszeit pro Elementarmuster für einen beobachteten Burst ausgehend von den Längen der Datenpakete des Bursts;

- Steuereinrichtungen (106), die eingerichtet sind, um iterativ die Bestimmungsmodule einer zeitlichen Frist und einer Neubewertung der Übertragungszeit, und so lange wie zum beobachteten Burst gehörende Datenpakete empfangen werden, zu steuern.

9. Programm für eine Vorrichtung zur Bestimmung einer Übertragungszeit pro Elementarmuster eines Stroms von Datenpaketen, das Programmcodeanweisungen enthält, die dazu bestimmt sind, die Ausführung der Schritte des Verfahrens nach einem der Ansprüche 1 bis 7 zu steuern, wenn das Programm von der Vorrichtung ausgeführt wird.

10. Aufzeichnungsträger, der von einer Vorrichtung lesbar ist, auf dem das Programm nach Anspruch 9 aufgezeichnet ist.

Fig. 1

Fig. 2

Fig. 3

**EP 2 023 534 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7139271 B1